# EUROPEAN PATENT SPECIFICATION

(11) **EP 3 466 654 B1**
(45) Date of publication and mention of the grant of the patent: **04.05.2022**
(21) Application number: 18161925.5
(22) Date of filing: 15.03.2018
(51) Int. Cl.: B29C 65/74, B65B 31/04, B65B 51/14, B65B 7/16, B29C 65/00, B29C 65/02, B65B 5/02, B65B 47/04

(54) **METHOD FOR PRODUCING A SEALED CONTAINER**
VERFAHREN ZUR HERSTELLUNG EINES VERSIEGELTEN BEHÄLTERS
PROCÉDÉ POUR PRODUIRE UN CONTENEUR HERMÉTIQUE

(30) Priority: 15.03.2017 NL 2018522
(43) Date of publication of application: 10.04.2019
(73) Proprietor: @llied Investments B.V., 7514 Enschede (NL)
(72) Inventor: Kamp, A.L., 7556 JE Hengelo (NL)
(74) Representative: Arnold & Siedsma

(56) References cited:
- EP-A1- 0 344 340
- EP-A1- 2 374 730
- JP-A- 2003 205 904
- US-A- 5 141 594

## Description

The invention relates a method for producing a sealed container with a product to be preserved therein, wherein a tray is folded from a blank, wherein the blank comprises: a polygonal bottom part, side walls connected along folding lines with the sides of said bottom part, at each corner of said bottom part, two triangular corner connecting parts connected along folding lines with each other and two adjacent ones of said side walls, and flange parts connected along folding lines with each of said side walls and with at least one of each said two triangular corner connecting parts, wherein at least said flange parts have a plastic upper side, wherein said tray is folded by: folding said side walls in one direction relative to said bottom part, and at each corner of said bottom part, folding and fixing said two triangular corner connecting parts onto either the inner side or the outer side of one of the adjacent side walls, folding said flange parts outwardly such that a substantially flat closed-circumferential flange is formed at the upper side of the tray, wherein said tray is placed in a die with said product present in said tray, wherein a sheet is placed over the flange, and wherein a stamp is pressed against said sheet and said flange while the lower side of the flange abuts a counter press surface of the die, whereby said sheet is sealed against said flange. Such a method is described in EP-A-2 374 730.

Sealed containers aim to provide an airtight and moisture tight package for the products, wherein the preferably fresh or cooked products have a long shelf life. In many cases also an inert gas is enclosed in the container in order to replace atmospheric air. Furthermore the container is preferably suitable for being heated in a microwave or conventional oven and/or for being kept in a refrigerator or freezer.

Prior art containers are often entirely made from plastic. In order to relieve the environmental burden replacement materials which are more environmental friendly are being sought. One such material is plastic laminated carton board. One feature of plastic laminated carton board is that it cannot be plastically deformed, whereby a different production method is necessary, namely to fold it from a blank. One problem thereof is, that the flange, which is bent outward, comprises overlapping areas where the carton is double layered, and as a consequence, there are steps present along the circumference of the flange. These steps are difficult to seal in an airtight and moisture tight manner with the sheet. Another problem is that the adjacent flange parts may be torn apart in the corners when the flange is folded outward, whereby it is difficult to seal the corner flange parts in an airtight and moisture tight manner with the sheet.

The invention aims at a reliable and easy method for sealing the container.

According to the invention the stamp is provided with local protrusions near each corner, wherein seen from above each of said protrusions extend across and on both sides of a step which is formed by the edge of a flange part which extends on top of the flange part below it, such that during sealing the pressure on said sheet and said flange parts is higher across and on both sides of said step than in adjacent parts of said flange parts.

Said seal is preferably a hot seal, a cold seal or an ultrasonic weld, most preferably a hot seal.

The blank is preferably made of carton board laminated with a plastic top layer. Said sheet may be a plastic sheat, or for instance a cardboard sheet, which is preferably laminated with a plastic layer. Said bottom part and said tray are preferably rectangular.

Said protrusions are preferably cylindrical, having a circular cross section, seen from above. The size of the cross section of said protrusions is preferably between 1 mm and 10 mm, seen from above. The depth of the protrusions is preferably between 0.1 mm and 1 mm.

Said stamp is preferably provided with further secondary local protrusions near each corner, wherein the secondary protrusions are substantially line shaped and extend, seen from above, in the centre of the flange across and on both sides of said corner, such that during sealing the pressure on said sheet and said flange parts in said line shaped portion is higher than in adjacent parts of said flange parts. The length of said secondary protrusions is preferably at least 10 mm and the width of said secondary protrusions is smaller than the width of the first protrusions, seen from above. The depth of the secondary protrusions is preferably smaller than the depth of the first protrusions.

Said blank preferably comprises flange parts connected along folding lines with each of said corner connecting parts, whereby said flange parts of said blank in unfolded state form a closed-circumferential flange. The flange of the tray preferably extends in the planes of the side walls of the tray before sealing, and is bent outward by the stamp during sealing. Said sheet is preferably placed over said flange at a distance from said counter press surface which is larger then the height of said flange before sealing, and wherein an inert gas is fed into said tray through the gap between the sheet and the flange before sealing.

An embodiment which is not in the scope of the invention also relates to a device for producing a sealed container with a product to be preserved therein, a die wherein a tray having a closed-circumferential flange at its upper side can be placed, and a stamp arranged to be pressed against a sheet placed over the flange while the lower side of the flange abuts a counter press surface of the die such that said sheet is sealed against said flange, characterized in that said stamp is provided with local protrusions near each corner. Furthermore the invention relates to a stamp for sealing a container with a product to be preserved therein, characterized in that said stamp is provided with local protrusions near each corner.

An embodiment which is not in the scope of the invention relates to a sealed container with a product to be preserved therein, wherein a tray is folded from a blank, wherein the blank comprises: a polygonal bottom part, side walls connected along folding lines with the sides of said bottom part, at each corner of said bottom part, two triangular corner connecting parts connected along folding lines with each other and two adjacent ones of said side walls, and flange parts connected along folding lines with each of said side walls, at least said flange parts having a plastic upper side, wherein said tray is folded by: folding said side walls in one direction relative to said bottom part, and at each corner of said bottom part, folding and fixing said two triangular corner connecting parts onto either the inner side or the outer side of one of the adjacent side walls, folding said flange parts outwardly such that a substantially flat closed-circumferential flange is formed at the upper side of the tray, wherein a sheet is placed over the flange and sealed against said flange, characterized in that, near each corner, across and on both sides of a step which is formed by the edge of a flange part which extends on top of the flange part below it an impression in said sheet and said flange parts across and on both sides of said step is present. Said tray is preferably at least substantially folded from carton board laminated with a plastic top layer.

The invention will be illustrated by means of embodiments as shown in the figures, wherein:
Figure 1 shows a top view of a first embodiment of a carton board blank for a container;
Figure 2 shows a detail of a perspective view of a partially folded blank of figure 1;
Figure 3 shows a detail of a perspective view of a partially folded blank of figure 1;
Figure 4 shows a perspective view of a partially folded blank of figure 1;
Figure 5 shows a perspective cross section of a device for sealing the container;
Figure 6 shows a perspective view of a container being a folded and sealed blank of figure 1;
Figures 7A and 7B show a top view and front view of a stamp used in the device of figure 5 for sealing the partially folded blank of figure 4;
Figure 8 shows a top view of a second embodiment of a carton board blank for a container
Figure 9 shows a detail of a perspective view of a partially folded blank of figure 8;
Figure 10 shows a detail of a perspective view of a partially folded blank of figure 8;
Figure 11 shows a detail of a perspective view of a partially folded blank of figure 8;
Figure 12 shows a top view of a stamp used in the device of figure 5 for sealing the partially folded blank of figure 10;

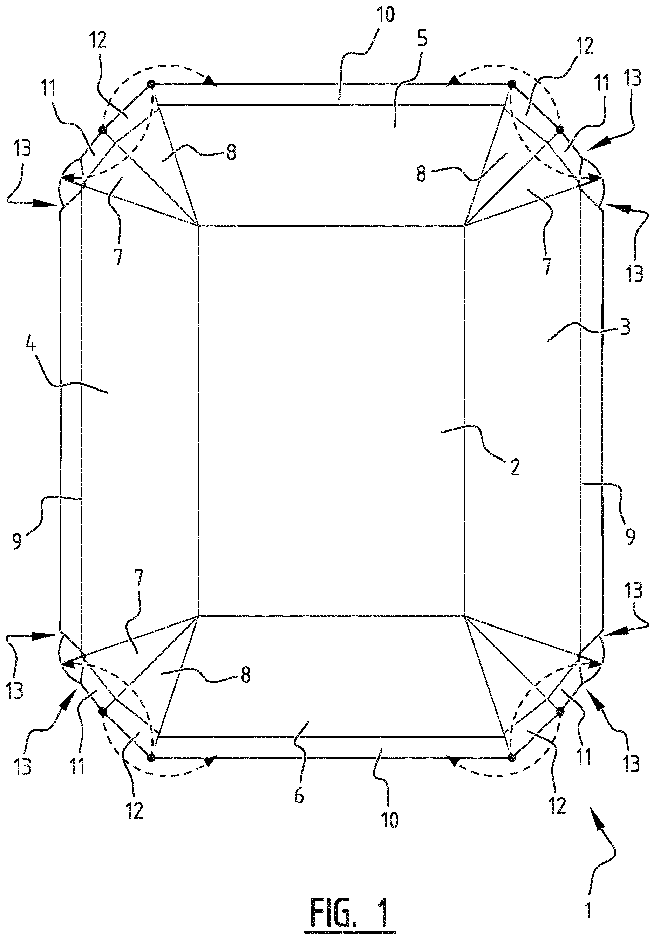

According to figures 1 - 4, a first embodiment of a blank 1 comprises a rectangular bottom part 2, side walls 3, 4, 5, 6, connecting parts 7, 8 and flange parts 9, 9', 10, 11, 11', 12 which are mutually connected along folding lines as shown. The blank 1 is comprised of a carton board, on top of which a PET laminate sheet is attached.

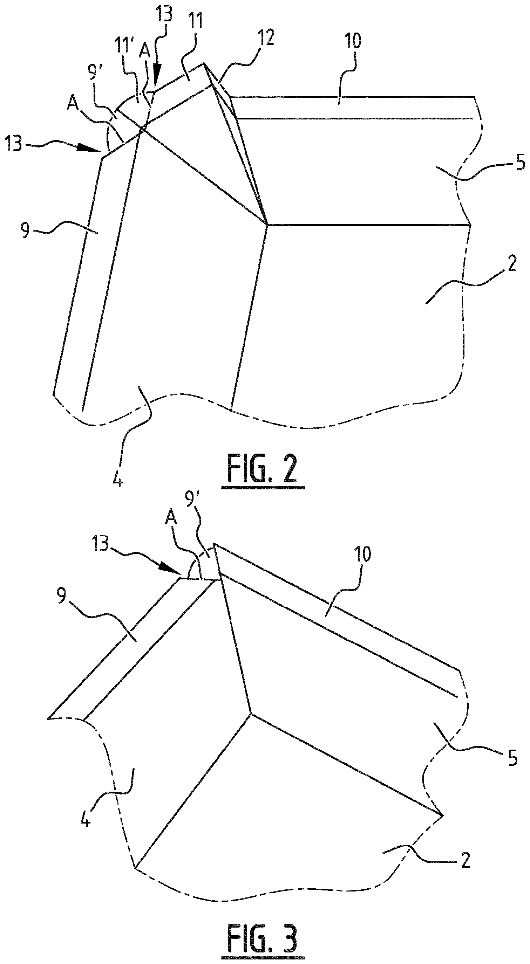

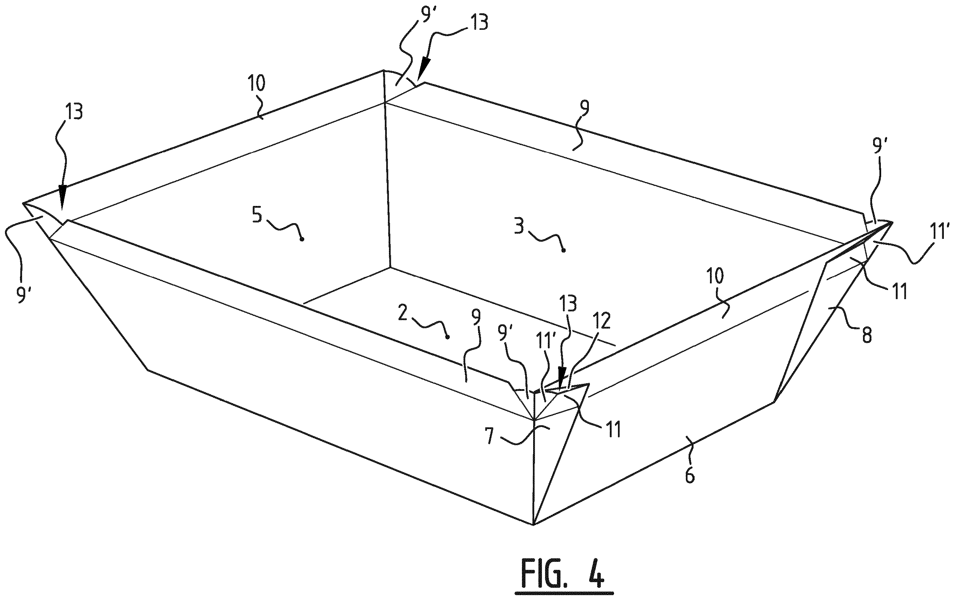

At each corner, the two mutually connected flange parts 9, 9'; 11, 11' which in the folded state (as seen in figures 3 and 4) extend adjacent said corner, are each provided with a local indentation 13 at a distance from the corner, whereby the flange part is locally less wide than adjacent parts 9', 11' of the flange part. During folding of said flange parts 9, 9'; 11, 11', between the outer edges of the flange parts 9, 9'; 11, 11' at the locations of said two indentations at both sides of the corner, a substantially straight folding line A is formed across the corner. The indentations have arc shaped edges, such that the two parts of the adjacent flange parts 9', 11' between the indentations at both sides of the corner together have a substantially semi-circular edge.

In order to form the container as shown in figure 4, the connecting parts 7, 8 at the corners of the tray are folded outward, while the side walls 3, 4, 5, 6 are folded upward, and are then folded against the respective side walls 5, 6, as shown in figures 2, 3 and 4. The angle between the side walls 3, 4, 5, 6 and the bottom part 2 in the embodiment as shown in figure 4 is approximately 110 degrees, but this angle may be anywhere between 90 degrees (i.e. upright side walls) and slightly less than 180 degrees (i.e. almost flat side walls), and preferably is between 100 degrees and 150 degrees. The outer surface of the connecting part 7 is glued to the outer surface of the side walls 5, 6. Furthermore the outer surface of flange part 12 is glued to the overlapping part of the outer surface of flange part 10.

The tray is then filled with a product, for instance a cooked meal.

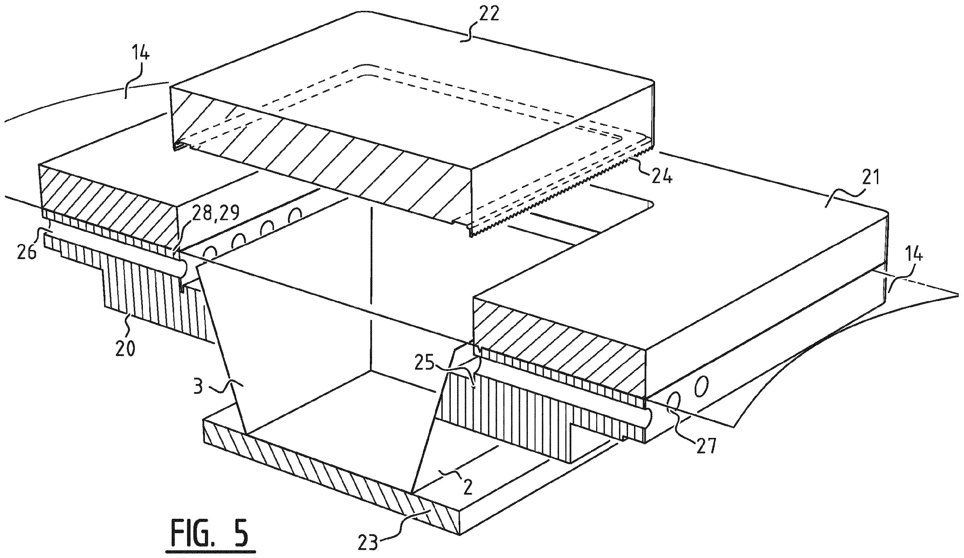

A device for sealing the tray is shown in figure 5. It comprises a lower die 20, an upper die 21, and a stamp 22. The lower die 20 is generally plate shaped, and is provided with a generally rectangular aperture (seen from above) with oblique side walls, having such dimensions as to support at least parts of the side walls 3, 4, 5, 6 of the tray. The bottom 2 is supported by a plate 23. The upper die 21 is also generally plate shaped, and is also provided with a generally rectangular aperture (seen from above), which is slightly larger than the aperture in the lower die 20. The upper side of the aperture in the lower die 20 is widened such that it matches the aperture in the upper die 21. The stamp 22 is generally rectangular and plate shaped, having dimensions corresponding to the aperture in the upper die 20 and the widened part of the aperture in the lower die 21. A knurled cutting knife 24 extends along the circumference of the stamp 22. The lower die 20 is provided with a recess 25 for accommodating the knife 24 during sealing.

The tray is held in the lower die 20 in such a manner that the upright circumferential flange parts 9, 10, 11, 12 extends above the horizontal surface of the widened aperture in the lower die 20. The upper edge of the flange parts 9, 1, 11, 12 extend at a small distance under the upper surface of the lower die 20. The lower die 20 is provided with supply channels 26 for feeding an inert gas to the tray, and with exhaust channels 27 for discharging air from the tray. The openings of the channels 26, 27 are provided in the side walls of the widened part of the aperture in the lower die 20.

The upper die is movable in vertical direction so as to clamp the sheet 14 between the upper die 21 and the lower die 20. In order to secure the sheet 14 the upper die 21 is provided with a circumferential rib 28 and the lower die 20 is provided with a corresponding recess 29.

In order to seal the tray with sheet 14, the sheet 14 is fed between the lower die 20 and the upper die 21. Then the upper die 21 is lowered onto the lower die 22 such that the sheet 14 is clamped in a fixed position above the tray. Then the tray is filled with an inert gas through the channels 26 while air is exhausted from the tray through channels 27. Subsequently the stamp 22 is lowered towards the lower die 20, thereby cutting a rectangular lid from the sheet 14, and moving said lid downward onto the upper edges of the flange parts 9, 9', 10, 11, 11', 12. The sheet 14 is held against the stamp 22 by means of suction holes in the stamp (not shown). The sheet 14 is then pushed further against the flanges 9, 9', 10, 11, 11', 12 of the tray, while these flange parts 9, 9', 10, 11, 11', 12 bend outward to form a flat closed-circumferential flange.

By the indentations 13 in the flange parts at both sides of the corner the cardboard flange will not be torn apart at the corner during said bending step, whereby a gas tight seal can be obtained.

Then the transparent lid 14 is sealed to the laminate sheet on the circumferential flange, whereby the container is closed in a gas tight manner. In order to form the hot seals 30, the stamp is provided with electric heating elements (not shown).

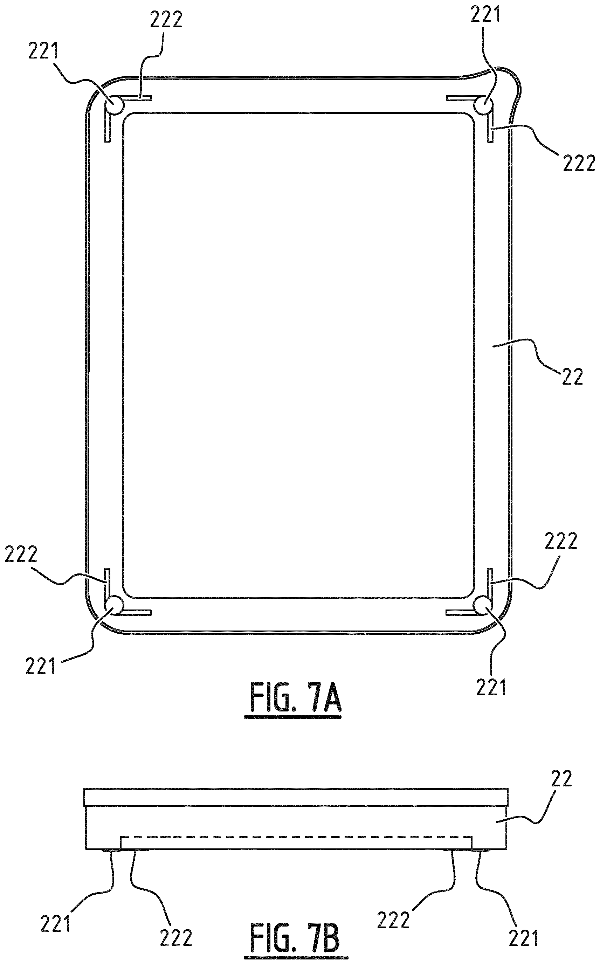

As shown in figures 7A/7B, the stamp 22 is provided with local cylindrical protrusions 221 near each corner. Each protrusion 221 is located such that during the sealing step it extends across and on both sides of the step which is formed by the edge of the folded flange parts 10, 12 which extends on top of the flange parts 9', 11' below it. During sealing extra pressure is exerted by the protrusion 221 on the plastic sheet 14 and said flange parts 10, 12, 9' 11', leaving a (in this example circular) imprint 15, in order to ensure a gas tight seal across the step. Furthermore, in order to withstand the higher tension on the seal in the corners, the stamp 22 is provided with further secondary local protrusions 222 near each corner, which are line shaped and extend in the centre of the flange across and on both sides of the corner. The depth of the protrusions 222 is smaller than the depth of the protrusions 221, but they exert enough extra local pressure to provide extra strength to the seal. Also the secondary protrusions 222 may leave a visible imprint 16 in the flange after the sealing step.

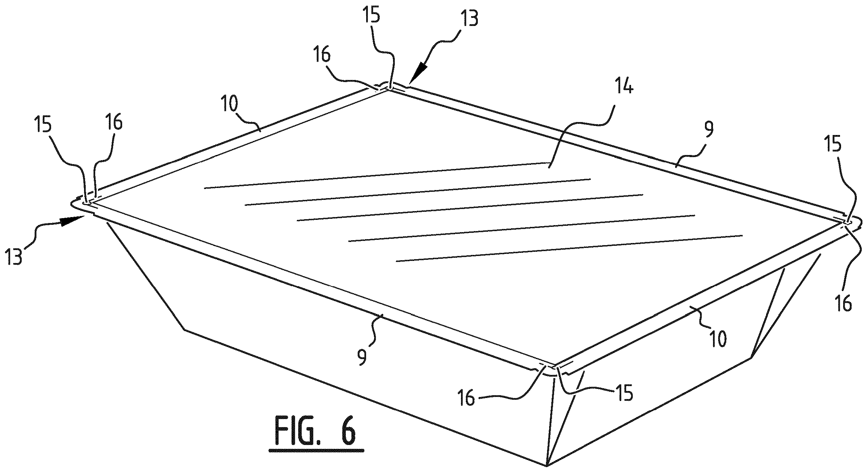

Finally the upper die 21 and the stamp 22 are moved upward and the sealed tray as shown in figure 6 is taken out.

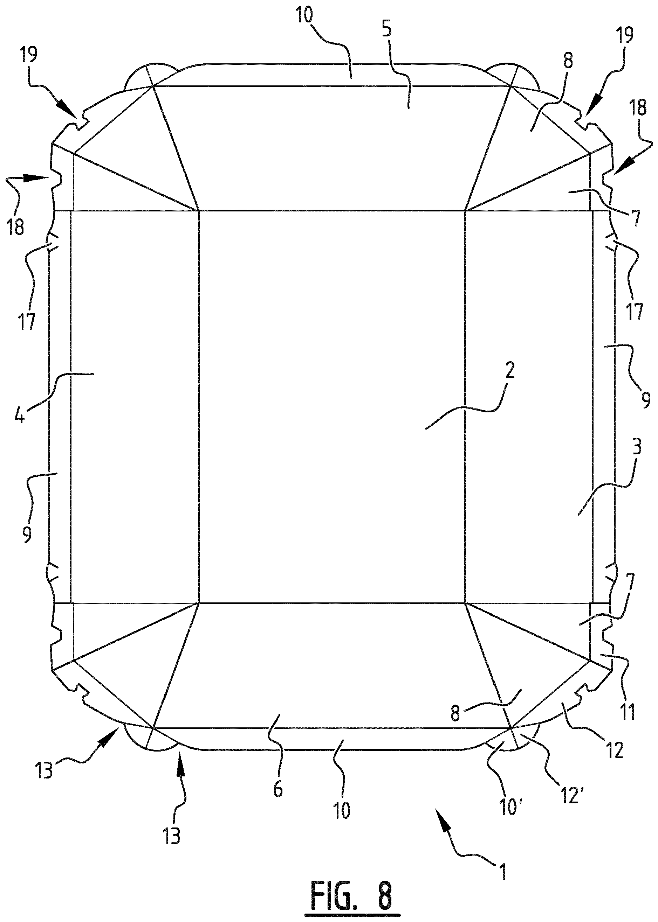

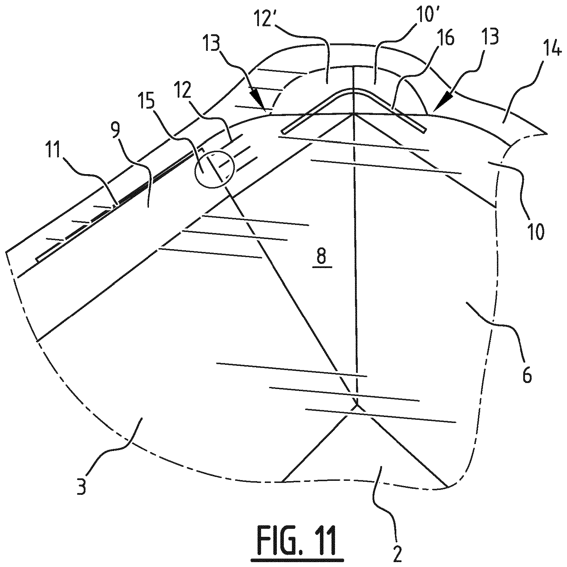

Figures 8- 11 show an alternative embodiment of the tray, and a corresponding stamp 22. Only the differences with the first embodiment will be described here.

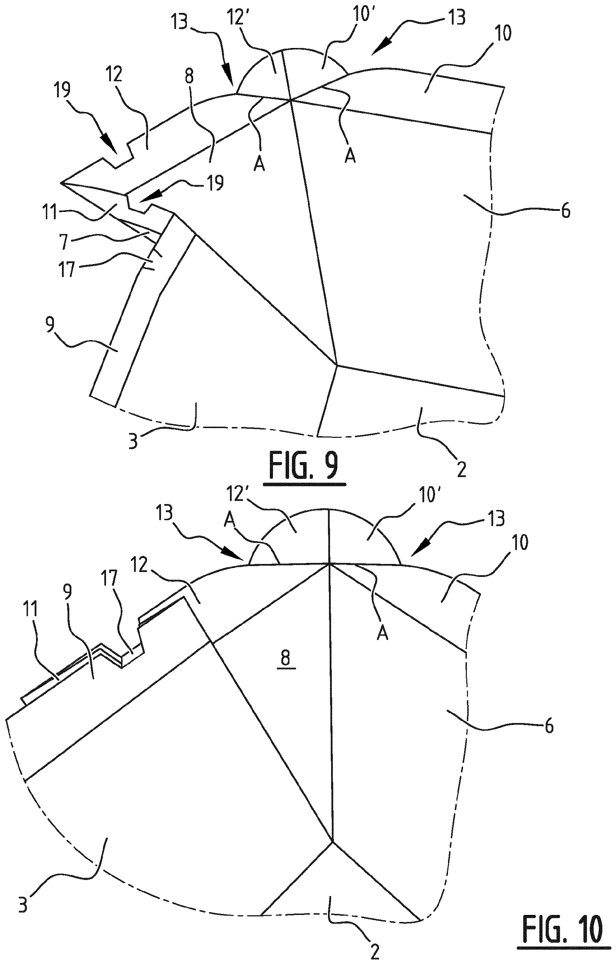

According to this embodiment, the triangular wall parts 7, 8 forming the corner connection parts are not indentical in shape, and the two side walls 3, 4 also have a different shape than in the first embodiment. This is merely to illustrate that many different folding patterns are possible to form the tray. In this embodiment, in order to form the container, the connecting parts 7, 8 at the corners of the tray are folded outward, while the side walls 3, 4, 5, 6 are folded upward, and are then folded against the respective side walls 3, 4, as shown in figures 9 and 10.

The outer surface of the connecting part 7 is glued to the outer surface of the side walls 3, 4. Furthermore the outer surface of flange part 11 may glued to the overlapping part of the outer surface of flange part 9. Alternatively, in this embodiment foldable lips 17 are formed in the flange parts 9, which cooperate with apertures 18, 19 in the respective flange parts 11, 12, which are located such that in the folded state as shown in figure 10, the lip 17 can be folded through the apertures 18, 19 in order to hold the flange parts 9, 11, 12 together and thereby maintains the container in the folded state until the flange is sealed.

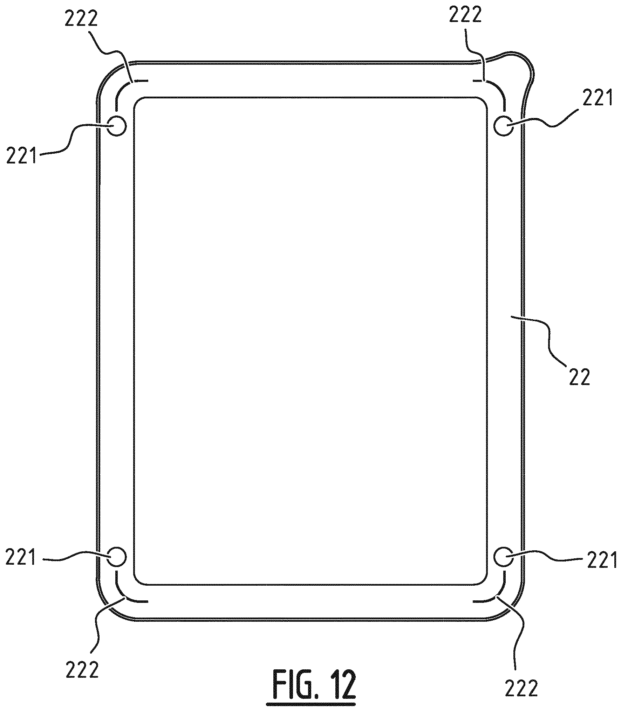

As shown in figure 12, in this embodiment the stamp 22 is provided with local cylindrical protrusions 221 at a different location near each corner. Each protrusion 221 is located such that during the sealing step it extends across and on both sides of the step which is formed by the edge of the folded flange parts 9, 11 which extends on top of the flange part 12 below it. During sealing extra pressure is exerted by the protrusion 221 on the plastic sheet 14 and said flange parts 9, 11, 12, leaving a (in this example circular) imprint 15, in order to ensure a gas tight seal across the step. As in the first embodiment, the stamp 22 is provided with further secondary local protrusions 222 near each corner, which are line shaped and extend in the centre of the flange across and on both sides of the corner. The depth of the protrusions 222 is smaller than the depth of the protrusions 221, but they exert enough extra local pressure to provide extra strength to the seal. Also the secondary protrusions 222 may leave a visible imprint 16 in the flange after the sealing step.

The invention has thus been described by means of preferred embodiments. It is to be understood, however, that this disclosure is merely illustrative. Various details of the structure and function were presented, but changes made therein, to the full extent extended by the general meaning of the terms in which the appended claims are expressed, are understood to be within the principle of the present invention. The description and drawings shall be used to interpret the claims.

## Claims

1. A method for producing a sealed container with a product to be preserved therein,
wherein a tray is folded from a blank (1), wherein the blank (1) comprises:
a polygonal bottom part (2),
side walls (3, 4, 5, 6) connected along folding lines with the sides of said bottom part (2),
at each corner of said bottom part (2), two triangular corner connecting parts (7, 8) connected along folding lines with each other and two adjacent ones of said side walls (3, 4, 5, 6),
and flange parts (9, 9', 10, 11, 11', 12) connected along folding lines with each of said side walls (3, 4, 5, 6) and with at least one of each said two triangular corner connecting parts (7, 8), wherein at least said flange parts (9, 9', 10, 11, 11', 12) have a plastic upper side,
wherein said tray is folded by:
folding said side walls (3, 4, 5, 6) in one direction relative to said bottom part (2), and
at each corner of said bottom part (2), folding and fixing said two triangular corner connecting parts (7, 8) onto either the inner side or the outer side of one of the adjacent side walls (3, 4, 5, 6),
folding said flange parts (9, 9', 10, 11, 11', 12) outwardly such that a substantially flat closed-circumferential flange (9, 9', 10, 11, 11', 12) is formed at the upper side of the tray,
wherein said tray is placed in a die (20, 21) with said product present in said tray,
wherein a sheet (14) is placed over the flange (9, 9', 10, 11, 11', 12), and
wherein a stamp (22) is pressed against said sheet (14) and said flange (9, 10, 11, 12) while the lower side of the flange abuts a counter press surface of the die (20, 21), whereby said sheet (14) is sealed against said flange (9, 9', 10, 11, 11', 12),
**characterized in that** said stamp (22) is provided with local protrusions (221) near each corner, wherein seen from above each of said protrusions (221) extend across and on both sides of a step which is formed by the edge of a flange part (10, 12) which extends on top of the flange part (9', 11') below it, such that during sealing the pressure on said sheet (14) and said flange parts (9', 10, 11', 12) is higher across and on both sides of said step than in adjacent parts of said flange parts (9', 10, 11', 12).

2. The method in accordance with claim 1, wherein said seal is a hot seal, a cold seal or an ultrasonic weld, preferably a hot seal.

3. The method in accordance with claim 1 or 2, wherein said blank (1) is made of carton board laminated with a plastic top layer.

4. The method in accordance with any of the previous claims, wherein said protrusions (221) are cylindrical, having a circular cross section, seen from above.

5. The method in accordance with any of the previous claims, wherein the size of the cross section of said protrusions (221) is between 1 mm and 10 mm, seen from above.

6. The method in accordance with any of the previous claims, wherein the depth of the protrusions (221) is between 0.1 mm and 1 mm.

7. The method in accordance with any of the previous claims, wherein said stamp (22) is provided with further secondary local protrusions (222) near each corner, wherein the secondary protrusions (222) are substantially line shaped and extend, seen from above, in the centre of the flange (9, 9', 10, 11, 11', 12) across and on both sides of said corner, such that during sealing the pressure on said sheet (14) and said flange parts (9', 10, 11', 12) in said line shaped portion is higher than in adjacent parts of said flange parts.

8. The method in accordance with claim 7, wherein the length of said secondary protrusions (222) is at least 10 mm and the width of said secondary protrusions (222) is smaller than the width of the first protrusions (221), seen from above.

9. The method in accordance with claims 7 or 8, wherein the depth of the secondary protrusions (222) is smaller than the depth of the first protrusions (221).

10. The method in accordance with any of the previous claims, wherein said blank (1) comprises flange parts (11, 11', 12) connected along folding lines with each of said corner connecting parts (7, 8), whereby said flange parts (9, 9', 10, 11, 11', 12) of said blank (1) in unfolded state form a closed-circumferential flange.

11. The method in accordance with any of the previous claims, wherein the flange (9, 9', 10, 11, 11', 12) of the tray extends in the planes of the side walls (3, 4, 5, 6) of the tray before sealing, and is bent outward by the stamp (22) during sealing.

12. The method in accordance with any of the previous claims, wherein said sheet (14) is placed over said flange (9, 9', 10, 11, 11', 12) at a distance from said counter press surface which is larger then the height of said flange (9, 9', 10, 11, 11', 12) before sealing, and wherein an inert gas is fed into said tray through the gap between the sheet (14) and the flange (9, 9', 10, 11, 11', 12) before sealing.

## Patentansprüche

1. Verfahren zur Herstellung eines abgedichteten Behälters mit einem darin aufzubewahrenden Produkt, wobei aus einem Rohling (1) eine Wanne gefaltet wird, wobei der Rohling (1) Folgendes aufweist:
einen polygonalen Bodenteil (2),
Seitenwände (3, 4, 5, 6), die entlang von Faltlinien mit den Seiten des Bodenteils (2) verbunden sind,
an jeder Ecke des Bodenteils (2) zwei dreieckige Eckverbindungsteile (7, 8), die entlang von Faltlinien miteinander und mit zwei angrenzenden der Seitenwände (3, 4, 5, 6) verbunden sind,
sowie Flanschteile (9, 9', 10, 11, 11', 12), die entlang von Faltlinien jeweils mit den Seitenwänden (3, 4, 5, 6) und mit jeweils mindestens einem der zwei dreieckigen Eckverbindungsteile (7, 8) verbunden sind, wobei zumindest die Flanschteile (9, 9', 10, 11, 11', 12) eine Kunststoffoberseite aufweisen,
wobei die Wanne durch folgende Schritte gefaltet wird:
Falten der Seitenwände (3, 4, 5, 6) in einer Richtung bezüglich des Bodenteils (2), und an jeder Ecke des Bodenteils (2) Falten und Befestigen der zwei dreieckigen Eckverbindungsteile (7, 8) entweder an der Innenseite oder an der Außenseite von einer der angrenzenden Seitenwände (3, 4, 5, 6),
Falten der Flanschteile (9, 9', 10, 11, 11', 12) nach außen derart, dass ein im Wesentlichen flacher, geschlossen umlaufender Flansch (9, 9', 10, 11, 11', 12) an der Oberseite der Wanne gebildet wird,
wobei die Wanne in einer Pressform (20, 21) platziert wird, wobei das Produkt in der Wanne vorliegt,
wobei eine Platte (14) über dem Flansch (9, 9', 10, 11, 11', 12) platziert wird, und
wobei ein Stanzstempel (22) gegen die Platte (14) und den Flansch (9, 10, 11, 12) gedrückt wird, während die Unterseite des Flansches an eine Gegendruckfläche der Pressform (20, 21) angrenzt, wodurch die Platte (14) gegenüber dem Flansch (9, 9', 10, 11, 11', 12) abgedichtet wird,
**dadurch gekennzeichnet, dass** der Stempel (22) mit lokal begrenzten Vorsprüngen (221) in der Nähe jeder Ecke versehen ist, wobei, bei Betrachtung von oben, jeder der Vorsprünge (221) durch einen und beidseitig eines Absatzes verläuft, welcher durch die Kante eines Flanschteils (10, 12) gebildet ist, die sich oben auf dem Flanschteil (9', 11') unter diesem erstreckt, so dass während des Abdichtens der Druck auf die Platte (14) und die Flanschteile (9', 10, 11', 12) durch den und beidseitig des Absatzes höher ist als in angrenzenden Teilen der Flanschteile (9', 10, 11', 12).

2. Verfahren nach Anspruch 1, wobei die Versiegelung eine Heißsiegelung, eine Kaltsiegelung oder eine Ultraschallverschweißung, vorzugsweise eine Heißsiegelung, ist.

3. Verfahren nach Anspruch 1 oder 2, wobei der Rohling (1) aus mit einer oberen Kunststoffschicht laminiertem Karton besteht.

4. Verfahren nach einem der vorhergehenden Ansprüche, wobei die Vorsprünge (221) bei Betrachtung von oben zylinderförmig mit einem kreisförmigen Querschnitt sind.

5. Verfahren nach einem der vorhergehenden Ansprüche, wobei die Größe des Querschnitts der Vorsprünge (221) bei Betrachtung von oben zwischen 1 mm und 10 mm liegt.

6. Verfahren nach einem der vorhergehenden Ansprüche, wobei die Tiefe der Vorsprünge (221) zwischen 0,1 mm und 1 mm liegt.

7. Verfahren nach einem der vorhergehenden Ansprüche, wobei der Stempel (22) mit weiteren zweiten lokal begrenzten Vorsprüngen (222) in der Nähe jeder Ecke versehen ist, wobei die zweiten Vorsprünge (222) im Wesentlichen linienförmig sind und sich bei Betrachtung von oben in der Mitte des Flansches (9, 9', 10, 11, 11', 12) derart durch die und beidseitig der Ecke erstrecken, dass der Druck auf die Platte (14) und die Flanschteile (9', 10, 11', 12) während des Abdichtens in dem linienförmigen Abschnitt größer als in angrenzenden Teilen der Flanschteile ist.

8. Verfahren nach Anspruch 7, wobei von oben betrachtet die Länge der zweiten Vorsprünge (222) mindestens 10 mm beträgt und die Breite der zweiten Vorsprünge (222) kleiner als die Breite der ersten Vorsprünge (221) ist.

9. Verfahren nach Anspruch 7 oder 8, wobei die Tiefe der zweiten Vorsprünge (222) geringer als die Tiefe der ersten Vorsprünge (221) ist.

10. Verfahren nach einem der vorhergehenden Ansprüche, wobei der Rohling (1) Flanschteile (11, 11', 12) aufweist, die entlang von Faltlinien jeweils mit den Eckverbindungsteilen (7, 8) verbunden sind, wodurch die Flanschteile (9, 9', 10, 11, 11', 12) des Rohlings (1) im nicht gefalteten Zustand einen geschlossen umlaufenden Flansch ausbilden.

11. Verfahren nach einem der vorhergehenden Ansprüche, wobei sich der Flansch (9, 9', 10, 11, 11', 12) der Wanne vor dem Abdichten in die Ebenen der Seitenwände (3, 4, 5, 6) der Wanne erstreckt und während des Abdichtens durch den Stempel (22) nach außen gebogen wird.

12. Verfahren nach einem der vorhergehenden Ansprüche, wobei die Platte (14) über dem Flansch (9, 9', 10, 11, 11', 12) in einem Abstand von der Gegendruckfläche platziert wird, der größer als die Höhe des Flansches (9, 9', 10, 11, 11', 12) vor dem Abdichten ist, und wobei der Wanne durch den Spalt zwischen der Platte (14) und dem Flansch (9, 9', 10, 11, 11', 12) vor dem Abdichten ein träges Gas zugeführt wird.

## Revendications

1. Procédé pour produire un récipient scellé avec un produit devant être conservé dans celui-ci, dans lequel un plateau est plié à partir d'une découpe (1), dans lequel la découpe (1) comprend:
une partie fond (2) polygonale,
des parois latérales (3, 4, 5, 6) reliées le long de lignes de pliage aux côtés de ladite partie fond (2),
à chaque coin de ladite partie fond (2), deux parties de liaison de coins (7, 8) triangulaires reliées le long de lignes de pliage l'une à l'autre et à deux adjacentes parmi lesdites parois latérales (3, 4, 5, 6),
et des parties bords (9, 9', 10, 11, 11', 12) reliées le long de lignes de pliage à chacune desdites parois latérales (3, 4, 5, 6) et à au moins une de chacune desdites deux parties de liaison de coins (7, 8) triangulaires, dans lequel au moins lesdites parties bords (9, 9', 10, 11, 11', 12) ont un côté supérieur en plastique,
dans lequel ledit plateau est plié en :
pliant lesdites parois latérales (3, 4, 5, 6) dans une direction par rapport à ladite partie fond (2), et
à chaque coin de ladite partie fond (2), pliant et fixant lesdites deux parties de liaison de coins (7, 8) triangulaires soit sur le côté intérieur soit sur le côté extérieur de l'une des parois latérales (3, 4, 5, 6) adjacentes,
pliant lesdites parties bords (9, 9', 10, 11, 11', 12) vers l'extérieur de sorte qu'un bord (9, 9', 10, 11, 11', 12) circonférentiel fermé sensiblement plat soit formé au niveau du côté supérieur du plateau,
dans lequel ledit plateau est placé dans une matrice (20, 21) avec ledit produit présent dans ledit plateau,
dans lequel une feuille (14) est placée sur le bord (9, 9', 10, 11, 11', 12), et
dans lequel un tampon (22) est pressé contre ladite feuille (14) et ledit bord (9, 10, 11, 12) tandis que le côté inférieur du bord vient en butée sur une surface de contre-pression de la matrice (20, 21), moyennant quoi ladite feuille (14) est scellée contre ledit bord (9, 9', 10, 11, 11', 12),
**caractérisé en ce que** ledit tampon (22) est doté de saillies (221) locales près de chaque coin, dans lequel vue depuis le dessus chacune desdites saillies (221) s'étend à travers et sur les deux côtés d'une surélévation qui est formée par la bordure d'une partie bord (10, 12) qui s'étend par-dessus la partie bord (9', 11') en dessous d'elle, de sorte que durant le scellement la pression sur ladite feuille (14) et lesdites parties bords (9', 10, 11', 12) soit plus grande à travers et sur les deux côtés de ladite surélévation que dans des parties adjacentes desdites parties bords (9', 10, 11', 12).

2. Procédé selon la revendication 1, dans lequel ledit scellement est un scellement à chaud, un scellement à froid ou un soudage par ultrasons, de préférence un scellement à chaud.

3. Procédé selon la revendication 1 ou 2, dans lequel ladite découpe (1) est faite de carton stratifié avec une couche de dessus en plastique.

4. Procédé selon l'une quelconque des revendications précédentes, dans lequel lesdites saillies (221) sont cylindriques, ayant une coupe transversale circulaire, vues depuis le dessus.

5. Procédé selon l'une quelconque des revendications précédentes, dans lequel la taille de la coupe transversale desdites saillies (221) est entre 1 mm et 10 mm, vue depuis le dessus.

6. Procédé selon l'une quelconque des revendications précédentes, dans lequel la profondeur des saillies (221) est entre 0,1 mm et 1 mm.

7. Procédé selon l'une quelconque des revendications précédentes, dans lequel ledit tampon (22) est doté de saillies (222) locales secondaires supplémentaires près de chaque coin, dans lequel les saillies (222) secondaires sont sensiblement en forme de ligne et s'étendent, vues depuis le dessus, dans le centre du bord (9, 9', 10, 11, 11', 12) à travers et sur les deux côtés dudit coin, de sorte que durant le scellement la pression sur ladite feuille (14) et lesdites parties bords (9', 10, 11', 12) dans ladite portion en forme de ligne soit plus grande que dans des parties adjacentes desdites parties bords.

8. Procédé selon la revendication 7,
dans lequel la longueur desdites saillies (222) secondaires est d'au moins 10 mm et la largeur desdites saillies (222) secondaires est plus petite que la largeur des premières saillies (221), vues depuis le dessus.

9. Procédé selon la revendication 7 ou 8,
dans lequel la profondeur des saillies (222) secondaires est plus petite que la profondeur des premières saillies (221).

10. Procédé selon l'une quelconque des revendications précédentes, dans lequel ladite découpe (1) comprend des parties bords (11, 11', 12) reliées le long de lignes de pliage à chacune desdites parties de liaison de coins (7, 8), moyennant quoi lesdites parties bords (9, 9', 10, 11, 11', 12) de ladite découpe (1) dans un état déplié forment un bord circonférentiel fermé.

11. Procédé selon l'une quelconque des revendications précédentes, dans lequel le bord (9, 9', 10, 11, 11', 12) du plateau s'étend dans les plans des parois latérales (3, 4, 5, 6) du plateau avant le scellement et est courbé vers l'extérieur par le tampon (22) durant le scellement.

12. Procédé selon l'une quelconque des revendications précédentes, dans lequel ladite feuille (14) est placée sur ledit bord (9, 9', 10, 11, 11', 12) à une distance de ladite surface de contre-pression qui est supérieure à la hauteur dudit bord (9, 9', 10, 11, 11', 12) avant le scellement, et dans lequel un gaz inerte est introduit dans ledit plateau par le biais de l'interstice entre la feuille (14) et le bord (9, 9', 10, 11, 11', 12) avant le scellement.
